# NEUE EUROPÄISCHE PATENTSCHRIFT

(11) **EP 3 770 486 B2**
(45) Veröffentlichungstag und Bekanntmachung des Hinweises auf die Entscheidung über den Einspruch: **23.04.2025**
(45) Hinweis auf die Patenterteilung: 09.03.2022
(21) Anmeldenummer: 20187595.2
(22) Anmeldetag: 24.07.2020
(51) Int. Cl.: F21S 8/08, F21V 23/04, A01M 29/00, G08G 1/01, F21Y 113/10, F21W 131/103

(54) **STRASSENLEUCHTE ZUR VERHINDERUNG VON WILDUNFÄLLEN**
STREET LAMP FOR THE PREVENTION OF ACCIDENTS INVOLVING WILDLIFE
LUMINAIRE D'ÉCLAIRAGE PUBLIC DESTINÉ À LA PRÉVENTION DE LA MORTALITÉ ANIMALE DUE AUX VÉHICULES

(30) Priorität: 26.07.2019 DE 102019120255
(43) Veröffentlichungstag der Anmeldung: 27.01.2021
(73) Patentinhaber: Siteco GmbH, 83301 Traunreut (DE)
(72) Erfinder: Schroll, Katrin, 83301 Matzing (DE); Wuppinger, Bernhard, 83362 Surberg (DE)
(74) Vertreter: Schmidt, Steffen

(56) Entgegenhaltungen:
- EP-A1- 3 073 465
- WO-A1-2013/144312
- WO-A1-2019/135587
- CN-U- 204 806 197
- DE-U1- 202013 007 713
- JP-A- 2005 056 689
- JP-A- 2009 032 260
- KR-A- 20150 020 971
- KR-A- 20150 061 934
- US-A- 5 939 987
- US-A1- 2008 080 178
- US-A1- 2019 107 273

## Beschreibung

Die vorliegende Erfindung betrifft eine Straßenleuchte, die speziell dafür eingerichtet ist, Unfälle zwischen Wild und Fahrzeugen zu verhindern.

Wildunfälle nehmen durch das sich stetig vergrößernde Straßennetz und die Anzahl der Verkehrsteilnehmer jährlich zu. Ein weiteres Problem wird die vergrößerte Anzahl von Elektrofahrzeugen darstellen, die kaum ein Motorgeräusch erzeugen, welches der Abschreckung von Wild dienen kann.

Aktuell werden in besonders gefährdeten Gebieten Wildschutzzäune oder Barrieren zur Straße errichtet. Die Installation solcher Barrieren oder Zäune ist jedoch sehr kostspielig und hat ferner den Nachteil, dass das Wild die Straße nicht mehr überqueren kann.

An anderer Stelle werden statische Wildschutzreflektoren installiert, die das Scheinwerferlicht von Fahrzeugen in Richtung von der Fahrbahn zu angrenzenden Gebieten reflektieren soll. Mit solchen statischen Wildschutzreflektoren konnte die Zahl der Wildunfälle bereits reduziert werden. Die statischen Wildschutzreflektoren können beispielsweise nachträglich an Straßenpylonen geschraubt werden. Aufgrund der geringen Ausläufe von Reflexionslicht, welches effektiv von der Straße in die angrenzenden Gebiete zu einem gefährdeten Tier umgelenkt wird, sind jedoch eine Vielzahl dieser Reflektoren notwendig. Im Bereich von Kurven sind die Reflektoren sogar mit noch geringerem Abstand zu setzen. Ferner wird beobachtet, dass sich beim Wild allmählich ein Gewöhnungseffekt an die verbauten Wildschutzreflektoren einstellt, so dass die Effektivität dieser Maßnahme wieder nachlässt.

Um dem Gewöhnungseffekt statischer Wildschutzreflektoren entgegenzutreten ist es im Stand der Technik bereits bekannt, auch sich drehende Reflektoren oder solarbetriebene Geräte, die mit Lichtsensoren arbeiten, einzusetzen. Die Effizienz dieser Geräte ist jedoch ähnlich wie bei statischen Wildschutzreflektoren begrenzt.

CN 204806197 U offenbart eine Straßenleuchte, die Folgendes umfasst: einen Lampenmast, einen Hauptlampenhalter, einen Zusatzlampenhalter, ein Schutzgehäuse, eine Zwangsluftkühlung, einen Kühlkörper, einen Infrarotdetektor und einen Schalter, wobei zwei Seiten des Lampenmastes jeweils mit Schieber versehen sind und der Hauptlampenhalter und der Zusatzlampenhalter durch die Schieber geführt sind. Der Infrarotdetektor aktiviert beim Erfassen eines Fahrzeuges oder eines Fußgängers über den Schalter die Haupt- und Zusatzlampen, welche einen Farbwiedergabeindex von 80 bzw. 60 aufweisen.

Aufgabe der vorliegenden Erfindung ist es, mit möglichst kostengünstigen Maßnahmen den Wildschutz effektiver zu gestalten und dabei ferner in den Wildschutzzonen trotzdem einen freien Wildwechsel über die Straße zu ermöglichen.

Gelöst wird die Aufgabe durch eine Straßenleuchte nach Anspruch 1.

Die Straßenleuchte der vorliegenden Erfindung ermöglicht die Abgabe von Licht mit zwei verschiedenen Spektralverteilungen. Ein Lichtanteil ist dafür bestimmt, die Straße wie eine normale Straßenleuchte breitstrahlend auszuleuchten, während der zweite Lichtanteil mit einer anderen Spektralverteilung von der Straße abgewandt in einen rückwärtigen Bereich gegeben wird, um das Wild an der Überquerung der Straße zu hindern. Dazu ist ferner vorgesehen, dass ein Sensor in der Straßenleuchte die Anwesenheit und/oder Bewegung von Tieren im gefährdeten Bereich erfasst und die Lichtabgabe des Lichts mit der zweiten Spektralverteilung im zweiten Raumwinkelbereich aktiviert. Zusätzlich kann der Sensor auch ein Fahrzeug erkennen, um das Licht des zweiten Spektralbereichs in den zweiten Raumwinkelbereich nur bei erkanntem Fahrzeug abgeben. Die Lichtabgabe im zweiten Spektralbereich wird aktiv durch wenigstens einen Detektor angesteuert. Durch die erhöhte Position der Leuchte kann der Detektor einen verhältnismäßig großen Raumwinkelbereich überwachen. Das Gerät wirkt daher sehr viel effizienter als Wildreflektoren, die üblicherweise lediglich auf Höhe der Straßenbegrenzungspfähle angebracht werden. Ferner kann das Licht im zweiten Spektralbereich auch gezielt in Richtung zum Wild eine höhere Intensität aufweisen, als dies durch einfache Wildreflektoren zu erzielen wäre. Ferner besteht ein weiterer Vorteil darin, da das Licht nur bei detektiertem Wild bzw. detektiertem Fahrzeug abgegeben wird, dass auch der Gewöhnungseffekt des Wildes an das zur Abschreckung vorgesehene Licht verringert wird. Da das Wild die Einrichtungen aus einer größeren ungefährlichen Distanz beobachtet, spricht der Sensor zur Erfassung des Tieres noch gar nicht an, so dass gemäß einer Ausführungsform kein Licht der zweiten Spektralverteilung abgegeben wird. Der Gewöhnungseffekt wird daher verhindert, weil das Tier nur in der unmittelbaren Gefahrensituation das Licht der zweiten Spektralverteilung wahrnimmt.

Erfindungsgemäß weist die zweite Spektralverteilung gegenüber der ersten Spektralverteilung einen höheren Blauanteil auf. Wildtiere, v.a. Schalenwild, die dämmerungs- und nachtaktiv sind, weisen einen Anteil von Stäbchen für das Sehen bei geringer Helligkeit auf, der bis zu 90% höher im Vergleich zum Menschen ist. Die höchste Empfindlichkeit dieser Stäbchen liegt im kurzwelligen blauen Bereich, kombiniert beim Schalenwild mit einem stark ausgeprägten Bewegungssehen. Die Abgabe eines höheren Blauanteils der Leuchte wird daher von den Tieren sehr stark wahrgenommen und hält sie vom Überqueren der Straße ab. Ferner kann auch ein Ultraviolettanteil in der zweiten Spektralverteilung abgegeben werden. Dieses Licht kann Fluoreszenzerscheinungen hervorrufen, so dass der Fahrer des sich annähernden Fahrzeuges das Wild durch Fluoreszenzerscheinungen besser erkennen kann. Das Licht im zweiten Spektralbereich dient daher allgemein nicht nur dazu, das Wild von dem Überqueren der Straße abzuhalten sondern außerdem auch dazu, das Wild in einer Gefahrensituation besser für den Fahrer des sich annähernden Fahrzeuges sichtbar zu machen.

Gemäß einer bevorzugten Ausführungsform wird das Licht der zweiten Spektralverteilung als Blinklicht abgegeben. Das Blinklicht hat den Effekt, dass der Fahrer des sich annähernden Fahrzeuges auch auf das Wild aufmerksam gemacht wird, um die Gefahrensituation durch rechtzeitiges Bremsen verhindern zu können.

Gemäß einer Ausführungsform weist der Sensor einen Kamerasensor, eine Infrarotkamera, einen PIR-Sensor, einen HF-Sensor und/oder einen Lidar-Sensor auf. Allgemein sind alle Sensoren geeignet, die dazu dienen können, die Präsenz oder Bewegung von Tieren sowie ggf. auch das Annähern von Fahrzeugen zu erkennen. Dies gilt insbesondere bei einer erhöhten Positionierung des Sensors in einer Leuchte. Daher kann das System im Vergleich zu konventionellen Wildreflektoren in einem größeren Abständen entlang der Straße vorgesehen werden.

Gemäß einer bevorzugten Ausführungsform ist der Sensor dafür eingerichtet, mit einem Sender eines sich nähernden Fahrzeuges zu kommunizieren, um das Fahrzeug zu detektieren. In Verbindung mit einer Sendereinrichtung, die ein aktives Kommunizieren zu dem Fahrzeug ermöglicht, kann das Fahrzeug präziser detektiert werden, da auch Daten wie die Geschwindigkeit übertragen werden können. Ferner ermöglicht eine bidirektionale Kommunikation auch, die Daten bzgl. eines erfassten Tieres direkt zu dem Fahrzeug zu senden, so dass der Fahrer beispielsweise in dem Instrumentenbrett oder in einem Headup-Display auf der Windschutzscheibe eine Warnung bzgl. des Wilds im Gefahrenbereich erhält.

Gemäß einer bevorzugten Ausführungsform ist die Straßenleuchte dafür eingerichtet, das Licht der zweiten Spektralverteilung nur in der Dämmerung und der Nacht abzugeben, wobei die Dämmerung und die Nacht über eine Zeitschaltung oder eine Lichtmessung von der Leuchte erkannt wird. Da die meisten Wildunfälle nur im Bereich der Dämmerung und der Nacht zu verzeichnen sind, ist es ausreichend, wenn die Anlage auch nur in diesen Zeiträumen betrieben wird. Vorzugsweise wird die Dämmerung und Nacht durch Lichtsensoren an der Leuchte erfasst, weil in dieser Ausführungsform das kritische Zeitfenster, welches sich über die Jahreszeiten selbstverständlich ändert, nicht vorprogrammiert oder über eine externe Datenverbindung übertragen werden muss.

Weitere Vorteile und Merkmale der vorliegenden Erfindung werden aus der nachfolgenden Beschreibung bevorzugter Ausführungsformen deutlich, die in Verbindung mit der beigefügten Figur beschrieben wird. In der Figur ist Folgendes dargestellt:

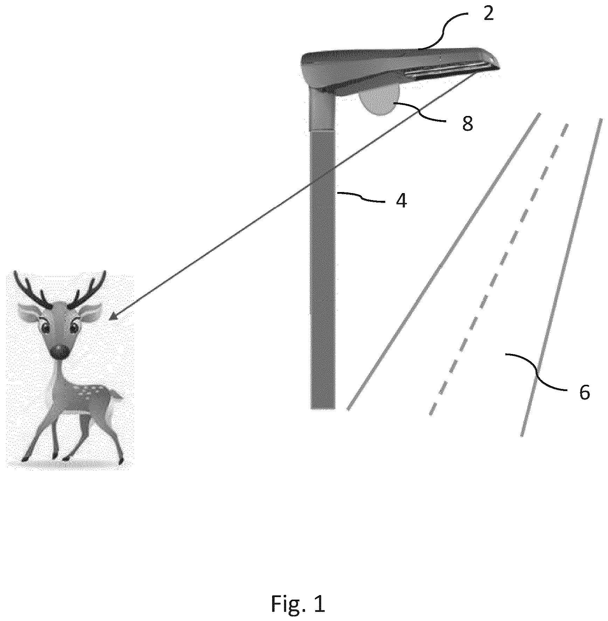

- Figur 1: zeigt schematisch eine Straßenleuchte einer Ausführungsform der Erfindung, welche zwischen einer Straße und einem Wildtier eingerichtet ist.

Bezugnehmend auf die Figur 1 ist eine konventionelle Straßenleuchte 2 dargestellt, die auf einem Leuchtenmast 4 in einer erhöhten Position am Rand einer Fahrbahn 6 angeordnet ist. Die Straßenleuchte 2 weist auf der zur Fahrbahn weisenden Seite eine Lichtaustrittsfläche auf, über die Licht in mehreren Richtungen entlang der Fahrbahn aber auch in eine rückwärtige Richtung hinter die Fahrbahn abgegeben werden kann. Die unterschiedlichen Richtungen für die Lichtabgabe können durch Optiken und/oder durch die Ausrichtung der Lichtquellen innerhalb der Leuchte erzielt werden. Die Erfindung ist auf keine besondere Optik eingeschränkt, soweit diese dazu geeignet ist, das Licht auch in eine rückwärtige Richtung hinter der Leuchte auf der der Fahrbahn 6 entgegengesetzten Seite abzugeben. Ferner sind wenigstens zwei Arten von Lichtquellen vorgesehen wobei der zweite Typ von Lichtquelle Licht in einen anderen Spektralbereich abgeben kann als der erste Lichtquellentyp. In der vorliegenden Ausführungsform ist vorgesehen, dass wenigstens eine Lichtquelle mit einem erhöhten Blauanteil dafür eingerichtete ist, Licht in den rückwärtigen Bereich der Leuchte abzugeben.

Ferner weist die Leuchte 2 einen Detektor 8 auf, der dafür eingerichtet ist aus einem Raumwinkelbereich hinter der Leuchte, d.h. auf der der Fahrbahn abgewandte Seite, Lebewesen zu erfassen. Dies kann beispielsweise durch einen Infrarotsensor erfolgen. Gemäß einer nicht beanspruchten Ausführungsform wird, sobald ein Wildtier in einem Gefährdungsbereich neben der Straße rückseitig der Leuchte 2 erfasst wird, die Aussendung von dem Licht des zweiten Spektralbereichs, d.h. der beschriebenen Ausführungsform Licht mit einem erhöhten Blauanteil, abgegeben. Insbesondere im Fall von Schalenwild hat dieses Licht den Effekt, dass das Wild davon abgehalten wird, sich weiter in Richtung der Leuchte, d.h. in Richtung der Fahrbahn zu nähern.

Die Leuchte weist ferner einen Detektor auf, der Fahrzeuge entlang der Straße erfasst. Gemäß der Erfindung wird die Abgabe des Lichts im zweiten Spektralbericht nur ausgelöst, wenn sowohl ein Wildtier als auch ein Fahrzeug auf der Straße, welches sich der Leuchte bzw. dem Wildtier nähert, detektiert wird.

Weitere Ausführungsformen sind möglich. Insbesondere kann vorgesehen sein, dass auch Licht im UV-Bereich oder Blinklicht abgegeben wird, um die Aufmerksamkeit des Fahrers auf Wild zu erhöhen. Auch dieser Lichtanteil wird nur aufgegeben, wenn tatsächlich ein Wildtier durch die Sensoreinheit 8 erfasst worden ist.

### BEZUGSZEICHENLISTE

- 2: Straßenleuchte
- 4: Leuchtenmast
- 6: Fahrbahn
- 8: Sensor

## Patentansprüche

1. Straßenleuchte (2) mit wenigstens zwei Leuchtmitteln, wobei eines der Leuchtmittel zur Abgabe von Licht einer ersten Spektralverteilung in einen ersten Raumwinkelbereich für eine zu beleuchtende Straße eingerichtet ist, und ein zweites Leuchtmittel zur Abgabe von Licht einer zu der ersten Spektralverteilung unterschiedlichen zweiten Spektralverteilung in einen zweiten Raumwinkelbereich eingerichtet ist, **dadurch gekennzeichnet, dass** der zweite Raumwinkelbereich dem ersten Raumwinkelbereich abgewandt ist und das zweite Leuchtmittel nur aktiviert ist, wenn ein mit der Straßenleuchte verbundener Sensor (8) ein Lebewesen im zweiten Raumwinkelbereich und ein Fahrzeug im ersten Raumwinkelbereich detektiert,
wobei die zweite Spektralverteilung gegenüber der ersten Spektralverteilung einen höheren Blauanteil aufweist.

2. Straßenleuchte nach Anspruch 1, wobei das Licht des zweiten Spektralbereichs als Blinklicht abgegeben wird.

3. Straßenleuchte nach einem der vorhergehenden Ansprüche, wobei der Sensor (8) einen Kamerasensor, eine Infrarotkamera, einen PIR-Sensor, einen HF-Sensor und/oder einen Lidar-Sensor aufweist.

4. Straßenleuchte nach einem der vorhergehenden Ansprüche, die ferner einen Sensor aufweist, der dafür eingerichtet ist, ein sich der Straßenleuchte näherndes Fahrzeug zu detektieren, und die Leuchte eingerichtet ist, um das zweite Leuchtmittel nur zu aktivieren, wenn auch ein sich annäherndes Fahrzeug detektiert wird.

5. Straßenleuchte nach einem der vorhergehenden Ansprüche, wobei die Straßenleuchte dafür eingerichtet ist, das Licht der zweiten Spektralverteilung nur in der Dämmerung und der Nacht abzugeben, wobei die Dämmerung und die Nacht über eine Zeitschaltung oder eine Lichtmessung von der Leuchte erkannt wird.

## Claims

1. A street lighting (2) having at least two lighting means, wherein one of the lighting means is configured to emit light of a first spectral distribution into a first solid angle range for a street to be illuminated, and a second lighting means is configured to emit light of a second spectral distribution, which is different from the first spectral distribution, into a second solid angle range, **characterized in that** the second solid angle range faces away from the first solid angle range and the second lighting means is activated only when a sensor (8) connected to the street lighting detects a living being in the second solid angle range and a vehicle in the first solid angle range
wherein the second spectral distribution has a higher blue component compared to the first spectral distribution.

2. The street lighting according to claim 1, wherein the light of the second spectral range is emitted as blinking light.

3. The street lighting according to one of the preceding claims, wherein the sensor (8) has a camera sensor, an infrared camera, a PIR sensor, an HF sensor and/or a lidar sensor.

4. The street lighting according to one of the preceding claims, which furthermore has a sensor which is configured to detect a vehicle approaching the street lighting, and the lighting is configured to activate the second lighting means only when an approaching vehicle is also detected.

5. The street lighting according to one of the preceding claims, wherein the street lighting is configured to emit the light of the second spectral distribution only at dusk and at night, wherein the dusk and the night are detected by the lighting via a timing circuit or a light measurement.

## Revendications

1. Lampadaire d'éclairage urbain (2) avec au moins deux moyens d'éclairage, un des moyens d'éclairage étant agencé pour la distribution de lumière d'une première répartition spectrale dans une première plage d'angle solide pour une route à éclairer, et un deuxième moyen d'éclairage étant agencé pour la distribution de lumière d'une deuxième répartition spectrale différente de la première répartition spectrale dans une deuxième plage d'angle solide, **caractérisé en ce que** la deuxième plage d'angle solide est éloignée de la première plage d'angle solide et le deuxième moyen d'éclairage n'est activé que quand un capteur (8) raccordé au lampadaire d'éclairage urbain détecte un être vivant dans la deuxième plage d'angle solide et un véhicule dans la première plage d'angle solide,
la deuxième répartition spectrale présentant par rapport à la première répartition spectrale une proportion de bleu plus élevée.

2. Lampadaire d'éclairage urbain selon la revendication 1, la lumière de la deuxième plage spectrale étant délivrée en tant que lumière clignotante.

3. Lampadaire d'éclairage urbain selon l'une des revendications précédentes, le capteur (8) comprenant un capteur de caméra, une caméra infrarouge, un capteur PIR, un capteur HF et/ou un capteur lidar.

4. Lampadaire d'éclairage urbain selon l'une des revendications précédentes, qui comporte en outre un capteur qui est agencé pour détecter un véhicule s'approchant du lampadaire d'éclairage urbain, et le lampadaire est agencé pour n'activer le deuxième moyen d'éclairage que si également un véhicule en approche est détecté.

5. Lampadaire d'éclairage urbain selon l'une des revendications précédentes, le lampadaire d'éclairage urbain étant agencé pour ne délivrer la lumière de la deuxième répartition spectrale que pendant le crépuscule et la nuit, le crépuscule et la nuit étant détectés par le biais d'un circuit de temporisation ou d'une mesure de lumière du lampadaire.
